# EUROPEAN PATENT SPECIFICATION

(11) **EP 2 863 512 B1**
(45) Date of publication and mention of the grant of the patent: **02.03.2022**
(21) Application number: 14152401.7
(22) Date of filing: 24.01.2014
(51) Int. Cl.: H02J 3/36

(54) **Power system, operation method thereof and control device for power system**
Stromversorgungssystem, Betriebsverfahren dafür und Steuerungsvorrichtung für Leistungssystem
Système d'alimentation, son procédé de fonctionnement et dispositif de commande pour système d'alimentation

(30) Priority: 18.10.2013 JP 2013216968
(43) Date of publication of application: 22.04.2015
(73) Proprietor: MITSUBISHI HEAVY INDUSTRIES, LTD., Tokyo 108-8215 (JP)
(72) Inventor: Wakasa, Tsuyoshi, Tokyo, 108-8215 (JP); Yamashita, Yukio, Tokyo, 108-8215 (JP); Matsuda, Satoshi, Tokyo, 108-8215 (JP)
(74) Representative: Cabinet Beau de Loménie

(56) References cited:
- EP-A1- 2 528 184
- EP-B1- 2 528 184
- WO-A1-2012/016585
- US-A1- 2012 223 577

## Description

### [Technical Field]

The present disclosure relates to a power system and an operation method thereof, as well as a control device for the power system.

### BACKGROUND ART

A HVDC system (HVDC: High Voltage Direct Current) has been used as a part of a power system and has the function to convert AC power into DC and transmit the direct current.

Specifically, the HVDC system comprises a sending end converter (SEC), a DC transmission line, and a receiving end converter (REC). The SEC is configured to convert AC power into DC power and then supply to the DC transmission line, and the REC is configured to convert DC voltage received from the DC transmission line into AC voltage.

In recent years, it has been desired that power systems or HVDC systems fulfill FRT requirement (FRT: Fault Ride Through). Specifically, it is desired that power systems and HVDC systems are designed to ride through even when a transient power failure (instantaneous voltage drop (Fault)) occurs.

To fulfill this type of FRT requirement, according to a control method for a HVDC system presented in Patent Document 1, a controller controls a sending end converter to execute a protection operation for reducing AC voltage at an AC side of the sending end converter when rise of voltage caused by instantaneous voltage drop is detected in a DC transmission line.

Further, it is described in Patent Document 1 to reduce power supplied to a HVDC system from a wind turbine generator in order to lower AC voltage at the AC side of the sending end converter. Specifically, Patent Document 1 describes a torque control for a rotor shaft of a wind turbine generator and a pitch control for a blade.

### [Citation List]

### [Patent Document]

[Patent Document 1]
US 2012/0300510 A
EP 2 528 184 discloses a method and apparatus for controlling a DC-transmission link.

### SUMMARY

### [Technical Problem]

In the case where the AC voltage is decreased at the AC side of the sending end converter as with the control method for the HVDC system presented in Patent Document 1, there is a concern that there is no stable operating point in a P-V curve which represents a relationship between active power and AC voltage supplied by a power generation system and this can cause voltage collapse resulting in trip (stop) of the power generation.

Even by reducing the power supplied to the sending end converter from the power generation system as described in Patent Document 1, a reduction amount and a reduction rate of the power do not catch up with a decline amount and a decline rate of the AC voltage at the AC side of the sending end converter. Thus, the above concern still exists.

It is an object of at least one embodiment of the present invention to provide a power system and an operation method for a power system, as well as a control device for a power system, whereby a protective operation is executed by a sending end converter to suppress trip of a power generation system.

### [Solution to Problem]

A power system according to at least one embodiment of the present invention is defined in claim 1.

With this configuration, the power generation system is configured to execute the stabilization operation corresponding to the protective operation performed by the sending end converter and thus, the reactive power is supplied to the sending end from the power generation system. Therefore, stable operating points are reliably secured in a P-V curve which represents a relationship between the AC voltage and the active power, and the trip of the power generation system is suppressed.

A further possible feature of the above power system is defined in dependent claim 2.

In some embodiment, the at least one power generation system includes at least one wind turbine generator,
the at least one wind turbine generator is constituted by a wind turbine generator equipped with a synchronous generator, the wind turbine generator comprising a field winding synchronous generator as the synchronous generator configured to generate power using wind power, and
the control device is configured to control the field winding synchronous generator to execute a field control so as to control the wind turbine generator with the synchronous generator to execute the stabilizing operation.

With this configuration, by performing the field control of the field winding synchronous generator, it is possible to promptly increase the reactive power output from the field winding synchronous generator. As a result, the stable operating points are reliably secured and the trip of the power generation system is suppressed.

With the control device configured to control at least one wind turbine generator selected from the plurality of wind turbine generators to execute the stabilizing operation, the at least one wind turbine generator selected from the plurality of wind turbine generators executes the stabilization operation so as to supply a sufficient amount of the reactive power to the sending end. As a result, the stable operating points are reliably secured and the trip of the power generation system is suppressed.

In some embodiments, the control device is configured to select said at least one wind turbine generator to execute the stabilizing operation from the plurality of wind turbine generators based on an active-power generation amount of each of the plurality of wind turbine generators.

With this configuration, at least one wind turbine generator is selected to execute the stabilizing operation from the plurality of wind turbine generators based on the active-power generation amount of each of the wind turbine generators. Thus, it is possible to supply a sufficient amount of the reactive power to the sending end. As a result, the stable operating points are reliably secured and the trip of the power generation system is suppressed.

In some embodiments, the at least one power generation system is constituted by a plurality of power generation systems, and
the control device is configured to select a power generation system to execute the stabilizing operation from the plurality of power generation systems based on a power transmission distance between the sending end and each of the plurality of power generation systems.

With this configuration, at least one power generation system is selected to execute the stabilizing operation from the plurality of power generation systems based on the power transmission distance and thus, it is possible to supply a sufficient amount of the reactive power to the sending end. As a result, the stable operating points are reliably secured and the trip of the power generation system is suppressed.

In some embodiments, the at least one power generation system is constituted by a plurality of power generation systems, and
the control device is configured to collect operation information of each of the plurality of power generation systems and to select a power generation system to execute the stabilizing operation from the plurality of power generation systems based on the collected operation information.

With this configuration, the control device selects the power generation system to execute the stabilizing operation from a plurality of the power generation systems based on the collected operation information and thus, it is possible to supply a sufficient amount of the reactive power to the sending end. As a result, the stable operating points are reliably secured and the trip of the power generation system is suppressed.

In some embodiments, the power system further comprises a sensor configured to obtain information regarding the AC voltage at the receiving end, and
the control device is configured to control the at least one power generation system to execute the stabilizing operation based on the information obtained by the sensor.

With this configuration, the control device controls at least one power generation system to execute the stabilizing operation based on the information related to the AC voltage Vac at the receiving end. Thus, it is possible to supply the reactive power to the sending end appropriately corresponding to the protective operation performed by the sending end converter. As a result, the stable operating points are reliably secured and the trip of the power generation system is suppressed.

In some embodiments, the sensor is constituted by a voltmeter which is configured to measure the AC voltage at the receiving end.

With this configuration, the control device controls at least one power generation system to execute the stabilizing operation based on the AC voltage Vac at the receiving end. Thus, it is possible to supply the reactive power to the sending end appropriately corresponding to the protective operation performed by the sending end converter. As a result, the stable operating points are reliably secured and the trip of the power generation system is suppressed.

In some embodiment, the control device is configured to control the at least one power generation system to execute an output reduction operation for reducing active power to be supplied to the sending end corresponding to the protective operation.

The protective operation is an operation to lower AC voltage Vac at the receiving end, whereas the stabilization operation is an operation to raise the AC voltage Vac at the receiving end. Thus, the stabilization operation and the protective operation have contrary actions. By prioritizing the stabilization operation, the action of the protective operation is suppressed. Here, the stabilization operation is intended to prevent temporary loss of the operating points of the power generation system caused by imbalance between the AC voltage and the active power Ps at the sending end due to rapid decline of the AC voltage Vac at the receiving end. Once the initial operating points of the protective operation are secured by executing the stabilization operation, the operating points may be maintained by other methods than the stabilization operation. Therefore, with the above configuration, the output reduction operation is executed in addition to the stabilization operation to achieve balance between the voltage and the active power at the sending end and maintain the operating points, thereby eliminating the effect of the stabilization operation on the protective operation. As a result, while reliably protecting the DC transmission line and the sending end converter from overvoltage, the stable operating points are reliably secured and the trip of the power generation system is suppressed.

In some embodiments, the control device is configured to reduce the active power to be supplied to the sending end depending on one or both of the AC voltage at the receiving end and the DC voltage in the DC transmission line.

With this configuration, as the control device is configured to reduce the active power to be supplied to the sending end depending on one or both of the AC voltage Vac at the receiving end and the DC voltage Vdc in the DC transmission line, it is possible to secure balance between the power supplied to the receiving end from the power generation system via the sending end and the power supplied to the DC transmission line from the sending end converter. As a result, the stable operating points are reliably secured and the trip of the power generation system is suppressed.

In some embodiments, the at least one power generation system is constituted by a plurality of power generation systems,
each of the plurality of power generation systems comprises a plurality of wind turbine generators disposed offshore,
the sending end converter is disposed offshore,
the receiving end converter is disposed onshore, and
the DC transmission line is laid at least in part in the sea.

With this configuration, it is possible to meet the FRT requirement by effectively transmitting power to the land side from a plurality of the wind turbine generators disposed offshore via the DC transmission line.

An operation method according to at least one embodiment of the present invention is defined in claim 10

With this configuration, the power generation system is configured to execute the stabilization operation corresponding to the protective operation performed by the sending end converter and thus, the reactive power is supplied to the sending end from the power generation system. Therefore, stable operating points are reliably secured in a P-V curve which represents a relationship between the AC voltage and the active power, and the trip of the power generation system is suppressed.

In some embodiments, the at least one power generation system includes at least one wind turbine generator,
the at least one wind turbine generator is constituted by a wind turbine generator equipped with a synchronous generator, the wind turbine generator comprising a field winding synchronous generator as the synchronous generator configured to generate power using wind power, and
in the stabilization operation step, a field control is executed by the field winding synchronous generator so as to execute the stabilization operation by the wind turbine generator equipped with the synchronous generator.

With this configuration, by performing the field control of the field winding synchronous generator, it is possible to promptly increase the reactive power output from the field winding synchronous generator. As a result, the stable operating points are reliably secured and the trip of the power generation system is suppressed.

In some embodiments, the operation method further comprises an output reduction step, after the stabilization operation step, of controlling the at least one power generation system to execute an output reduction operation for reducing active power to be supplied to the sending end.

With this configuration, after the execution of the stabilization operation by the at least one power generation system, the output reduction operation is executed by at least one power generation system so as to secure balance between the power supplied to the receiving end from the power generation system via the sending end and the power supplied to the DC transmission line from the sending end converter. As a result, the stable operating points are reliably secured and the trip of the power generation system is suppressed.

A control device according to at least one embodiment of the present invention is for a power system which comprises: at least one power generation system configured to supply AC power to a sending end; a sending end converter configured to convert the AC power into DC power, the sending end converter having a receiving end which is connected to the sending end via a AC transmission line; a receiving end converter configured to convert the DC power into AC power, the receiving end converter being connected to the sending end converter via a DC transmission line; and a protection device configured to cause the sending end converter to execute a protective operation for lowering AC voltage at the receiving end when the DC voltage in the DC transmission line rises beyond a threshold, and
the control device is configured to control the at least one power generation system to execute a stabilization operation for increasing a supply of reactive power to the sending end corresponding to the protective operation executed by the sending end converter.

With this configuration, the power generation system is configured to execute the stabilization operation corresponding to the protective operation performed by the sending end converter and thus, the reactive power is supplied to the sending end from the power generation system. Therefore, stable operating points are reliably secured in a P-V curve which represents a relationship between the AC voltage and the active power, and the trip of the power generation system is suppressed.

### [Advantageous Effects]

According to at least one embodiment of the present invention, the power system and the operation method for the power system, as well as the control device for the power system are provided, in which trip of the power generation system is suppressed by the protective operation performed by the sending end converter.

### BRIEF DESCRIPTION OF DRAWINGS

[FIG.1] FIG.1 is a schematic illustration of a configuration of a power system according to some embodiments.
[FIG.2] FIG.2 is a flow chart schematically illustrating a control method executed by a control device for the power system according to some embodiments.
[FIG.3A] FIG.3A is a graph showing active power supplied from a power generation system as well as a P-V curve representing a relationship between AC voltage and the active power in a normal state according to some embodiments.
[FIG.3B] FIG.3B is a graph showing the active power supplied from the power generation system as well as the P-V curve representing the relationship between AC voltage and the active power immediately after a sending end converter executes a protective operation according to some embodiments.
[FIG.3C] FIG.3C is a graph showing the active power supplied from the power generation system as well as the P-V curve representing the relationship between AC voltage and the active power immediately after a power generation system executes a stabilization operation according to some embodiments.
[FIG.4] FIG.4 is a schematic illustration of a configuration of the power generation system according to some embodiments and the control device.
[FIG.5] FIG.5 is a graph illustrating a relationship between excitation current and armature current in a field winding synchronous generator.
[FIG.6] FIG.6 is a schematic illustration of a configuration of the power generation system according to some embodiments and the control device.
[FIG.7] FIG.7 is a flow chart schematically illustrating a control method executed by a control device for the power system according to some embodiments.
[FIG.8] FIG.8 is a schematic illustration of a configuration of the power system according to some embodiments.
[FIG.9A] FIG.9A is a schematic illustration of a configuration of a wind turbine generator with a winding induction generator according to some embodiments.
[FIG.9B] FIG.9B is a schematic illustration of a configuration of a wind turbine generator with a field winding synchronous generator according to some embodiments.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

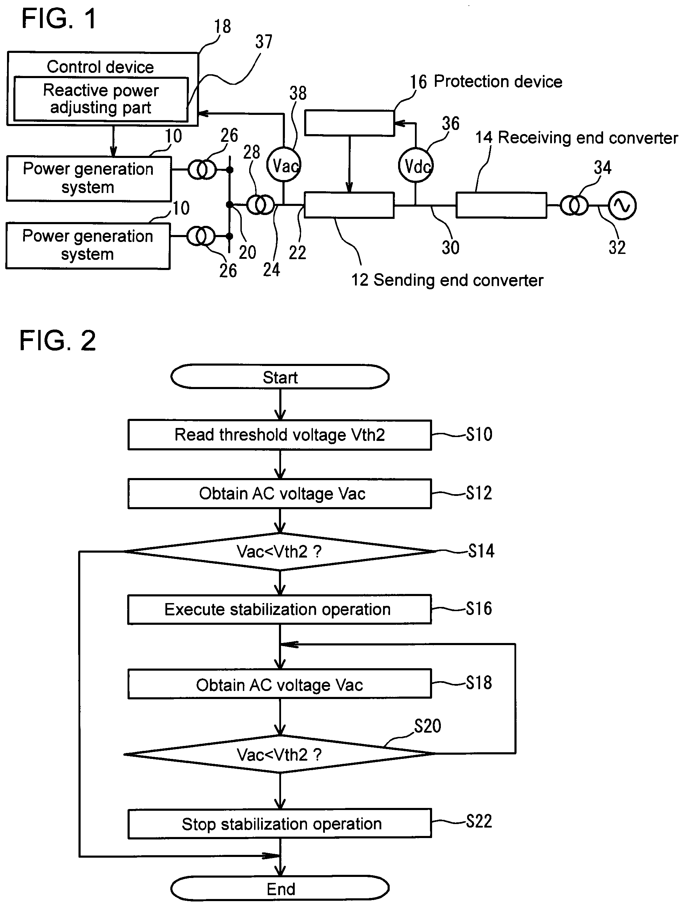

FIG.1 is a schematic illustration of an overall configuration of a power system according to some embodiments.

A power system comprises at least one power generation system 10, a sending end converter 12, a receiving end converter 14, a protection device 16 and a control device 18.

The power generation system 10 is configured to supply AC power to a sending end 20.

The sending end converter 12 is constituted by an AC-DC converter. The sending end converter 12 comprises a receiving end 22, and the receiving end 22 is connected to a sending end 20 via an AC transmission line 24. A transformer 26 for power transmission may be provided between the power generation system 10 and the sending end 20, and a transformer 28 for power conversion may be provided between the sending end converter 12 and the sending end 20.

The receiving end converter 14 is constituted by a DC-AC converter. The receiving end converter 14 is connected to the sending end converter 12 via a DC transmission line 30 and is configured to convert DC power into AC power. The AC power output from the sending end converter 12 is supplied to consumers via an AC transmission line 32. Further, a transformer 34 for power conversion may be provided in the AC transmission line 32.

The protection device 16 is configured to control the sending end converter 12 to execute a protective operation for lowering AC voltage at the receiving end 22 when DC voltage in the DC transmission line 30 exceeds a threshold Vth1. In some embodiments, a voltmeter 36 is connected to the DC transmission line 30 to detect the rise in the DC voltage in the DC transmission line 30. The DC voltage Vdc measured by the voltmeter 36 is input to the protection device 16.

The control device 18 is configured to control at least one power generation system 10 to execute a stabilization operation for increasing a supply of reactive power to the sending end 20 corresponding to the protective operation executed by the sending end converter 12.

Therefore, the control device 18 comprises a reactive power adjusting part 37 which is configured to adjust a reactive-power generation amount in the at least one power generation system 10. In some embodiments, a voltmeter 38 is connected to the AC transmission line 24 to detect the protective operation executed by the sending end converter 12. The AC voltage Vac measured by the voltmeter 38 is input to the control device 18.

Execution of the stabilization operation corresponding to the protective operation can include not only execution of the stabilization operation immediately after the execution of the protective operation but also execution of the stabilization operation at the same time as the execution of the protective operation, but according to the invention, the execution of the stabilization operation is done immediately before the execution of the protective operation.

Herein, FIG.2 is a flow chart schematically illustrating one exemplary control method for the power system performed by the control device 18.

In the control method of FIG.2, the control device 18 reads threshold voltage Vth2 which is set in advance (a reading step S10). Then, the control device 18 obtains the AC voltage Vac of the receiving end 22 (an AC voltage obtaining step S12), and determines whether or not the AC voltage Vac is below the threshold voltage Vth2 (a determination step S14).

If it is determined in the determination step S14 that the AC voltage Vac is below the threshold voltage Vth2 (if YES), the control device 18 controls the power generation system 10 to execute the stabilization operation (a stabilization operation execution step S16).

Next, the control device 18 obtains AC voltage Vac of the receiving end 22 again (an AC voltage obtaining step S18), and determines whether or not the AC voltage Vac is below the threshold voltage Vth2 (a determination step S20).

If it is determined in the determination step S20 that the AC voltage Vac is below the threshold voltage Vth2 (if YES), the AC voltage obtaining step S18 and the determination step 20 are repeated until the AC voltage Vac becomes below the threshold voltage Vth2.

On the other hand, if it is determined in the determination step S20 that the AC voltage Vac is equal to or above the threshold voltage Vth2 (if NO), the control device 18 controls the power generation system 10 to stop the stabilization operation, and a series of steps are ended. Further, if it is determined in the determination step S14 that the AC voltage Vac is equal to or above the threshold voltage Vth2 (if YES), a series of steps are ended too.

Then, once the series of steps are ended, the control device 18 repeatedly executes the control method of FIG.2 while the power system is in operation.

According to the above power system, when some sort of abnormality occurs on a consumer side with respect to the receiving end converter 14 and the DC voltage Vdc of the DC transmission line 30 rises beyond the threshold Vth1, the sending end converter 12 executes the protective operation.

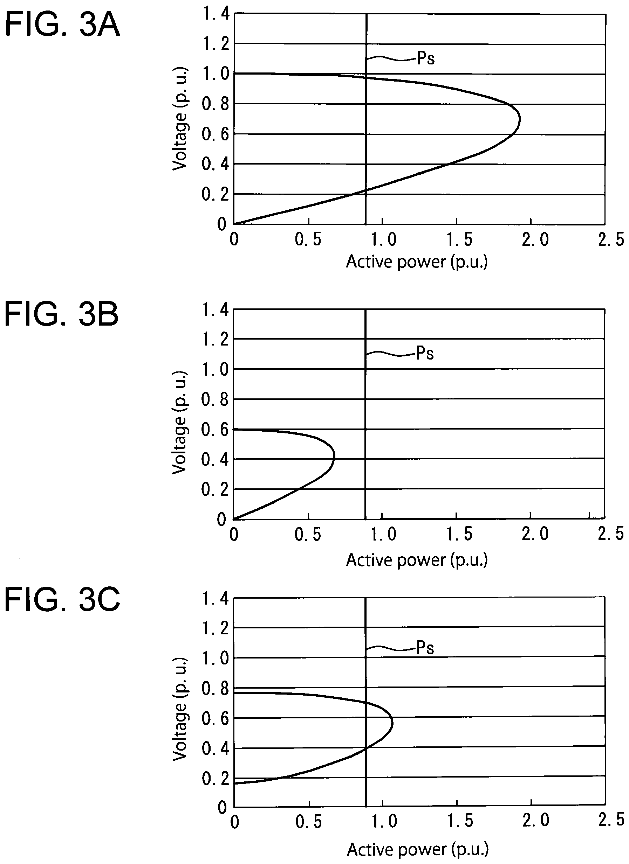

FIG.3A is a graph showing active power supplied from the power generation system 10 as well as a P-V curve representing a relationship between the AC voltage and the active power at the sending end 20 in a normal state. FIG.3B is a graph showing the active power supplied from the power generation system 10 as well as the P-V curve representing the relationship between AC voltage and the active power immediately after the sending end converter 12 executes the protective operation. FIG.3C is a graph showing the active power supplied from the power generation system 10 as well as the P-V curve representing the relationship between AC voltage and the active power immediately after the power generation system 10 executes the stabilization operation.

In FIG.3A, there are intersections (operating points) between the P-V curve and the active power Ps, and naturally the power generation system 10 operates stably in the normal state.

On the other hand, in FIG.3B, due to the protective operation performed by the sending end converter 12, a rightward bulge of the P-V curve is small compared to FIG.3A and thus, there is no intersection between the P-V curve and the active power Ps. Therefore, there is a concern that when the protective operation is executed by the sending end converter 12, the operation of the power generation system 10 becomes unstable. This can cause voltage collapse and the power generation 10 can trip.

In view of this, in the power system of FIG.1 and the control method of FIG.2, the stabilization operation is executed by the power generation system 10 corresponding to the protective operation executed by the sending end converter 12. By executing the stabilization operation, the reactive power supplied to the sending end 20 from the power generation system 10 is increased, and as illustrated in FIG.3C, the rightward bulge of the P-V curve becomes large compared to FIG.3B to obtain intersections (operating points) between the P-V curve and the active power Ps in the sending end 20. As a result, the operation of the power generation system 10 becomes stable in spite of the protective operation executed by the sending end converter 12 and hence, it is possible to suppress trip of the power generation system 10

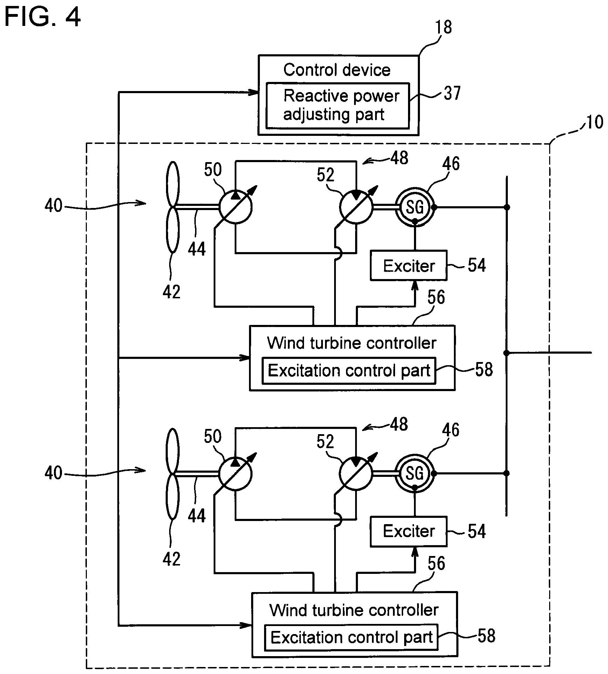

FIG.4 is a schematic illustration of the configuration of the power generation system 10 according to some embodiments and the control device 18.

The power generation system 10 includes at least one power generation unit. In some embodiments, as illustrated in FIG.4, the power generation system 10 includes at least one wind turbine generator 40 which is configured to generate power using wind power.

The wind turbine generator 40 comprises at least one blade 42, a main shaft 44 configured to rotate with the blade 42, and a generator 46 configured to generate power using torque of the main shaft 44.

In some embodiments, the wind turbine generator 40 further comprises a hydraulic transmission 48 which serves as a power transmission mechanism for transmitting the torque of the main shaft 44 to the generator 46. The hydraulic transmission 48 comprises a hydraulic pump 50 for raising a pressure of the operating oil by the torque of the main shaft 44, and a hydraulic motor 52 for driving a rotor of the generator 46 using the pressure of the operating oil.

In some embodiment, the generator 46 is a field winding synchronous generator, and the wind turbine generator 40 comprises an exciter 54 for adjusting excitation current, and a wind turbine controller 56 configured to control the wind turbine generator 40. The wind turbine controller 56 comprises an excitation control part 58 for controlling the exciter 54.

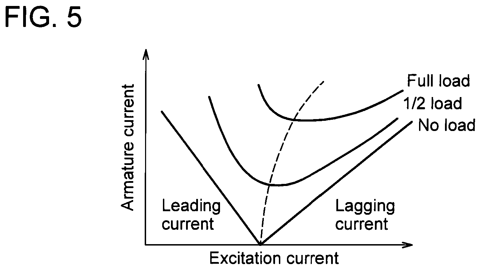

Here, FIG.5 is a graph illustrating a relationship between excitation current and armature current in a field winding synchronous generator. As illustrated in FIG.5, in the case where the generator 46 is a field winding synchronous generator, by increasing the excitation current, lagging current increases and hence lagging reactive power which is supplied form the generator 46 can be increased.

Therefore, in this configuration, the reactive power adjusting part 37 of the control device 18 instructs the wind turbine controller 56 to increase the reactive-power generation amount corresponding to the protective operation by the sending end converter 12, and then the excitation control part 58 of the wind turbine controller 56 control the exciter 54 to increase the excitation current (a field control).

With this configuration, by performing the field control of the field winding synchronous generator as the stabilization operation, it is possible to promptly increase the reactive power which is output from the field winding synchronous generator. As a result, the stable operating points are reliably secured and the trip of the power generation system 10 is suppressed.

In some embodiments, the power generation system 10 includes the wind turbine generator 40, and the control device 18 is configured to control at least one wind turbine generator 40 selected from a plurality of wind turbine generators 40 to execute the stabilizing operation.

With this configuration, the at least one wind turbine generator 40 selected from the plurality of wind turbine generators 40 executes the stabilization operation so as to supply a sufficient amount of the reactive power to the sending end 20. As a result, the stable operating points are reliably secured and the trip of the power generation system 10 is suppressed.

In some embodiments, the control device 18 is configured to select at least one wind turbine generator 40 to execute the stabilizing operation from the plurality of wind turbine generators 40 based on the active-power generation amount of each of the wind turbine generators 40.

With this configuration, at least one wind turbine generator 40 is selected to execute the stabilizing operation from the plurality of wind turbine generators 40 based on the active-power generation amount of each of the wind turbine generators 40. Thus, it is possible to supply a sufficient amount of the reactive power to the sending end 20. As a result, the stable operating points are reliably secured and the trip of the power generation system 10 is suppressed.

In some embodiments, the control device 18 selects a wind turbine generator 40 whose active-power generation amount is small among the plurality of wind turbine generators 40, to execute the stabilization operation.

In some embodiments, the power system is constituted by a plurality of power generation systems 10, and the control device 18 is configured to select a power generation system 10 to execute the stabilizing operation from the plurality of power generation systems 10 based on a power transmission distance between the sending end 20 and each of the plurality of power generation systems 20.

With this configuration, at least one power generation system 10 to execute the stabilizing operation is selected from the plurality of power generation systems 10 based on the power transmission distance and thus, it is possible to supply a sufficient amount of the reactive power to the sending end 20. As a result, the stable operating points are reliably secured and the trip of the power generation system 10 is suppressed.

In some embodiments, the control device 18 selects a power generation system 10 whose power transmission distance is shorter than the rest of the plurality of the power generation systems 10, to execute the stabilization operation. As a result, a loss by a capacitance of the transmission line is suppressed and it is possible to reliably supply a sufficient amount of the reactive power to the sending end 20.

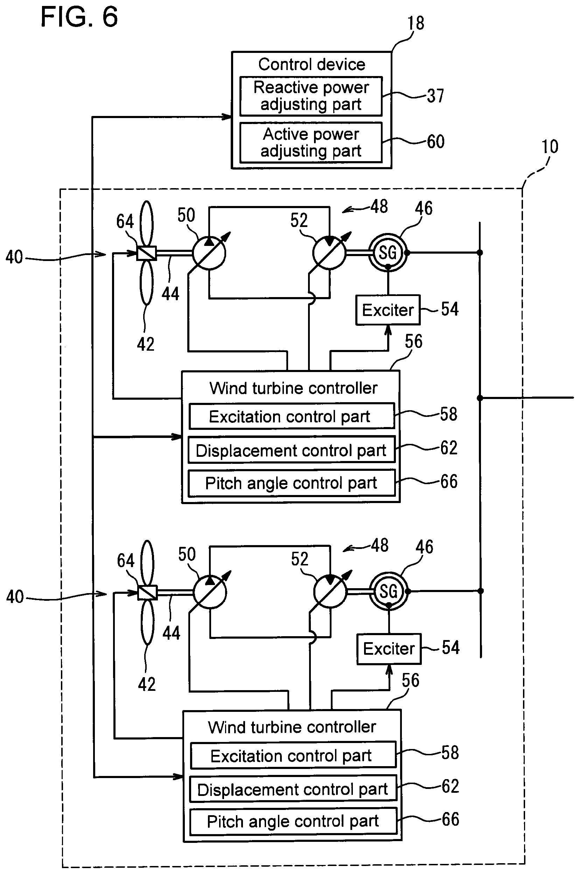

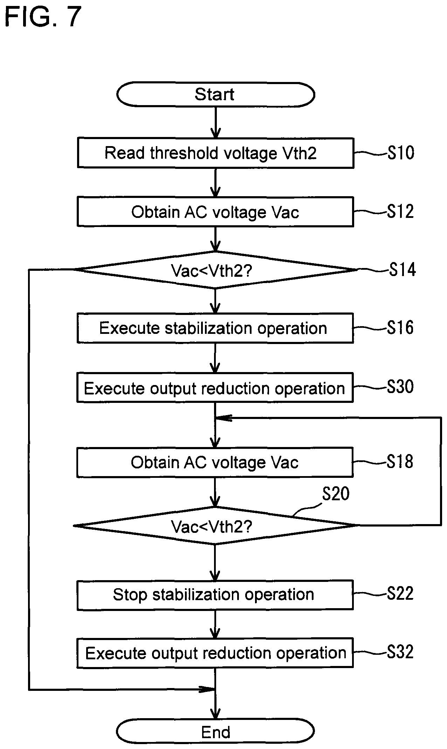

FIG.6 is a schematic illustration of a configuration of the power generation system 10 according to some embodiments and the control device 18. FIG.7 is a flow chart schematically illustrating one example of the control method executed by the control device 18 for the power system.

As illustrated in FIG.6, in some embodiments, the control device 18 comprises an active power adjusting part 60. The active power adjusting part 70 is configured to controls at least one power generation system 10 to execute an output reduction operation for reducing active power to be supplied to the sending end 20 corresponding to the protective operation.

In the control method of FIG.7, the control device 18 controls the power generation system 10 to execute the output reduction operation (an output reduction operation execution step S30) after the stabilization operation execution step S16. This is, however, not restrictive and the output reduction operation execution step S30 may be performed at the same time as the stabilization operation execution step S16.

Further, in the flow chart of FIG.7, the control device 18 stops the output reduction operation after a stabilization operation stopping step S22 (an output reduction operation stopping step S32). This is, however, not restrictive and the output reduction operation stopping step S32 may be executed at the same time as the stabilization operation stopping step S22.

The protective operation is an operation to lower AC voltage Vac at the receiving end 22, whereas the stabilization operation is an operation to raise the AC voltage Vac at the receiving end 22. Thus, the stabilization operation and the protective operation have contrary actions. By prioritizing the stabilization operation, the action of the protective operation is suppressed. Here, the stabilization operation is intended to prevent temporary loss of the operating points of the power generation system 10 caused by imbalance between the AC voltage and the active power Ps at the sending end 20 due to rapid decline of the AC voltage Vac at the receiving end 22. Once the initial operating points of the protective operation are secured by executing the stabilization operation, the operating points may be maintained by other methods than the stabilization operation.

With the configurations of FIG.6 and FIG.7, the power generation system 10 executes the output reduction operation in addition to the stabilization operation. The output reduction operation is for moving the active power Ps leftward in FIG.3C and maintaining the operating points to achieve the balance between the voltage and the active power Ps at the sending end 20, so as to eliminate the effect of the stabilization operation on the protective operation. As a result, while reliably protecting the DC transmission line 30 and the sending end converter 12 from overvoltage, the stable operating points are reliably secured and the trip of the power generation system 10 is suppressed.

In some embodiments, as illustrated in FIG.6, the hydraulic pump 50 and the hydraulic motor 52 are variable displacement type, and the wind turbine controller 56 comprises a displacement control part 62. The displacement control part 62 is configured to control displacement of one or both of the hydraulic pump 50 and the hydraulic motor 52. The displacement control part 62 controls displacement of one or both of the hydraulic pump 50 and the hydraulic motor 52 so as to increase or reduce the torque input to the generator 46 from the hydraulic motor 52, thereby increasing or reducing the amount of the active power Ps generated in the generator 46. Thus, the control device 18 controls the power generation system 10 to execute the output reduction operation using the displacement control of the hydraulic pump 50 and the hydraulic motor 52.

In some embodiments, as illustrated in FIG.6, the wind turbine generator 40 comprises a pitch angle adjusting part 64 which is configured to adjust the pitch angle of the blade 42. The wind turbine controller 56 comprises a pitch angle control part 66 for controlling the pitch angle adjusting part 64. The pitch angle control part 66 controls the pitch angle of the blade 42 so as to increase or reduce the torque input to the hydraulic pump 50 from the main shaft 44, thereby increasing or reducing the amount of active power Ps generated in the generator 46. Therefore, the control device 18 can control the power generation system 10 to execute the output reduction operation using the pitch angle control.

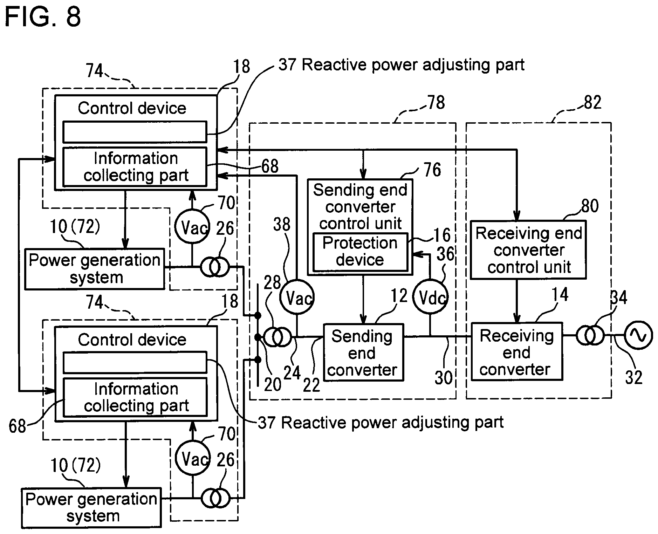

FIG.8 is a schematic illustration of a configuration of the power system according to some embodiments.

As illustrated in FIG.8, in some embodiments, the power system comprises a plurality of power generation systems 10. Further, the control device 18 comprises an information collecting part 68 which is configured to collect operation information of each of the power generation systems 10. The control device 18 is configured to select a power generation system 10 to execute the stabilizing operation from a plurality of the power generation systems 10 based on the collected operation information.

With this configuration, the control device 18 selects the power generation system 10 to execute the stabilizing operation from a plurality of the power generation systems 10 based on the collected operation information and thus, it is possible to supply a sufficient amount of the reactive power to the sending end 20. As a result, the stable operating points are reliably secured and the trip of the power generation system 10 is suppressed.

In some embodiments, as illustrated in FIG.8, the power system may comprise a voltmeter 70 to measure the output voltage of the power generation system 10 as the operation information of the power generation system 10.

In some control devices, the power system may comprise a plurality of the control devices 18 corresponding to a plurality of the power generation systems 10 as illustrated in FIG.8. In this case, the control device 18 may control the corresponding power generation system under its control based on the operation information collected from other control devices 18 to execute the stabilization operation and the output reduction operation.

Alternatively, one of the control devices 18 may serve as a central control unit to control any of the power generation systems 10 to execute the stabilization operation and the output reduction operation.

In some embodiments, the control device 18 is configured to reduce the active power to be supplied to the sending end 20 depending on one or both of the AC voltage Vac at the receiving end 22 and the DC voltage Vdc in the DC transmission line 30.

With this configuration, as the control device 18 is configured to reduce the active power to be supplied to the sending end 20 depending on one or both of the AC voltage Vac at the receiving end 22 and the DC voltage Vdc in the DC transmission line 30, it is possible to secure balance between the power supplied to the receiving end 22 from the power generation system 10 via the sending end 20 and the power supplied to the DC transmission line 30 from the sending end converter 12. As a result, the stable operating points are reliably secured and the trip of the power generation system 10 is suppressed.

In some embodiments, each of the power generation systems 10 includes a plurality of wind turbine generators 40 disposed offshore, the sending end converter 12 is disposed offshore, the receiving end converter 14 is disposed onshore, and the DC transmission line 30 is laid at least in part in the sea.

In this case, as illustrated in FIG.8, each of the power generation systems 10 constitutes an offshore wind farm 72. The control device 18 and the transformer 26 for power transmission 26 are disposed offshore corresponding to the offshore wind farm 72 and constitute an offshore transformer substation. The control device 18 may be constituted by a monitoring control device called SCADA (supervisory control and data acquisition).

The sending end converter 12 and the transformer 28 for power conversion are disposed offshore with a sending end converter control unit 76 for controlling the sending end converter 12, thereby together constituting an offshore converter station 78. Further, the protection device 16 may be a part of the sending end converter control unit 76. The receiving end converter 14 and the transformer 34 for power conversion are disposed onshore with a receiving end converter control unit 80 for controlling the receiving end converter 14, and together constitute an onshore converter station 82.

With this configuration, it is possible to meet the FRT requirement by effectively transmitting power to the land side from a plurality of the wind turbine generators 40 disposed offshore via the DC transmission line 30.

The present invention is not limited to the above described embodiments, and may include modification and combination of the above described embodiments.

For example, in some embodiments, the voltmeter 38 is provided in the power system to serve as the sensor for obtaining information related to the AC voltage Vac at the receiving end 22. The sensor is, however, not limited to this.

For instance, the control device 18 may comprise a sensor which is configured to detect information regarding the execution of the protective operation that is output from the protection device 16 (protective operation execution information). Or the control device 18 may comprise a sensor which is configured to detect trouble information of the consumer side that could lead to increased DC voltage Vdc in the DC transmission line 30. Alternatively, the control device 18 may be configured to directly receive the trouble information of the consumer side from the sending end converter control unit 76 or the receiving end converter control unit 80.

Based on the information related to the AC voltage Vac at the receiving end 22, at least one power generation system 10 executes the stabilization operation so as to supply the reactive power to the sending end 20 appropriately corresponding to the protective operation performed by the sending end converter 12. As a result, the stable operating points are reliably secured and the trip of the power generation system 10 is suppressed.

Particularly with the voltmeter 38, it is possible to supply the reactive power to the sending end 20 appropriately corresponding to the protective operation performed by the sending end converter 12. As a result, the stable operating points are reliably secured and the trip of the power generation system 10 is suppressed.

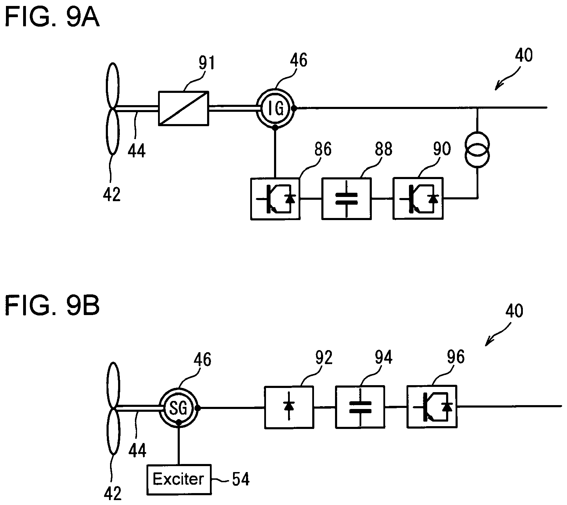

In some embodiments, the wind turbine generator 40 comprises the field winding synchronous generator as the generator 46. This is, however, not restrictive and the wind turbine generator 40 may comprise a winding induction generator as illustrated in FIG.9A. The configuration illustrated in FIG.9A is referred to as DFIG (Double-fed induction generator) and winding wires of the winding induction generator are connected to a transmission line via a power converter formed by a generator side inverter 86, a DC bus 88, and a grid side inverter 90. Meanwhile, the generator 46 is connected to the main shaft 44 via a transmission 91 constituted by a mechanical gear.

In some embodiments, the field winding synchronous generator serving as the generator 46 of the wind turbine generator 40 is connected to the main shaft 44 via the hydraulic transmission. This is, however, not restrictive and the field winding synchronous generator may be directly connected to the main shaft 44 as illustrated in FIG.9B. In this case, the field winding synchronous generator is connected to the transmission line via a power converter formed by a converter 92, a DC bus 94 and an inverter 96.

Further, in the configuration of FIG.9B, the generator 46 may be a permanent magnet synchronous generator using a permanent magnet. This configuration is referred to as FC (full-converter).

Even in the case where the wind turbine generator 40 illustrated in FIG.9A and FIG.9B is used, the control device 18 controls the power converter so as to change the supply of the reactive power solely by electric operation without requiring a mechanical operation, similarly to the wind turbine generator 40. As a result, it is possible to immediately change the supply of the reactive power.

However, compared to the wind turbine generator 40 illustrated in FIG.9A, the wind turbine generator 40 of FIG.4 has a wide adjustment range of the reactive power and is capable of supplying more reactive power.

Further, compared to the wind turbine generator 40 illustrated in FIG.9B, the wind turbine generator 40 of FIG.4 is not provided with a power converter and thus has little limitation on control. Therefore, it is possible to instantaneously supply a large amount of reactive power.

Finally, the power generation unit for the power generation system 10 is not particular limited to the wind turbine generator 40, and the power generation system 10 may include a thermal power generator, a hydraulic power generator, a nuclear power generator, a solar power generator, a tidal power generator, etc.

### [Reference Signs list]

- 10: Power generation system
- 12: Sending end converter
- 14: Receiving end converter
- 16: Protection device
- 18: Control device
- 20: Sending end
- 22: Receiving end
- 24: AC transmission line
- 26: Transformer for power transmission
- 28: Transformer for power conversion
- 30: DC transmission line
- 32: AC transmission line
- 34: Transformer for power conversion
- 36: Voltmeter
- 38: Voltmeter
- 40: Wind turbine generator

## Claims

1. A power system comprising:
at least one power generation system (10) comprising a plurality of wind turbine generators, the power generation system (10) being configured to supply AC power to a sending end (20);
a sending end converter (12) configured to convert the AC power into DC power, the sending end converter (12) having a receiving end (22) which is connected to the sending end (20) via an AC transmission line (24);
a receiving end converter (14) configured to convert the DC power into AC power, the receiving end converter (14) being connected to the sending end converter (12) via a DC transmission line (30);
a protection device (16) configured to control the sending end converter (12) to execute a protective operation for lowering AC voltage at the receiving end (22) when DC voltage in the DC transmission (30) line rises beyond a threshold; and
a control device (18) configured to control the at least one power generation system (10) to execute a stabilization operation for increasing a supply of reactive power to the sending end (20) corresponding to the protective operation executed by the sending end converter (12) ;the power system being **characterized in that**
the control device is configured to control at least one wind turbine generator (40) selected from the plurality of wind turbine generators (40) to execute the stabilizing operation, the stabilization operation is executed by increasing the reactive power so as to obtair intersections between a P-V curve and an active power Ps in the sending end, and the stabilization operation is executed immediately before the execution of the protective operation.

2. The power system according to claim 1, wherein the control device is configured to select a wind turbine generator for executing the stabilization operation whose active-power generation amount is small among the plurality of wind turbine generators to execute the stabilization operation.

3. The power system according to any one of claims 1-2,
wherein the at least one power generation system (10) includes at least one wind turbine generator (40),
wherein the at least one wind turbine generator (40) is constituted by a wind turbine generator equipped with a synchronous generator, the wind turbine generator (40) comprising a field winding synchronous generator as the synchronous generator configured to generate power using wind power, and
wherein the control device (18) is configured to control the field winding synchronous generator to execute a field control so as to control the wind turbine generator (40) with the synchronous generator to execute the stabilizing operation.

4. The power system according to any one of claims 1 to 3,
wherein the at least one power generation system (10) is constituted by a plurality of power generation systems, and
wherein the control device (18) is configured to collect operation information of each of the plurality of power generation systems (10) and to select a power generation system to execute the stabilizing operation from the plurality of power generation systems based on the collected operation information.

5. The power system according to any one of claims 1 to 4, further comprising:
a sensor (36;38) configured to obtain information regarding the AC voltage at the receiving end (22),
wherein the control device (19) is configured to control the at least one power generation system (10) to execute the stabilizing operation based on the information obtained by the sensor (36;38).

6. The power system according to claim 5,
wherein the sensor (36;38) is constituted by a voltmeter which is configured to measure the AC voltage at the receiving end (22).

7. The power system according to any one of claims 1 to 6,
wherein the control device (18) is configured to control the at least one power generation system (10) to execute an output reduction operation for reducing active power to be supplied to the sending end (20) corresponding to the protective operation.

8. The power system according to claim 7,
wherein the control device (18) is configured to reduce the active power to be supplied to the sending end (20) depending one or both of the AC voltage at the receiving end (22) and the DC voltage in the DC transmission line (30).

9. The power system according to any one of claims 1 to 8,
wherein the at least one power generation system (10) is constituted by a plurality of power generation systems,
wherein each of the plurality of power generation systems comprises a plurality of wind turbine generators (40) disposed offshore,
wherein the sending end converter (12) is disposed offshore,
wherein the receiving end converter (14) is disposed onshore, and
wherein the DC transmission line (30) is laid at least in part in the sea.

10. An operation method for a power system according to any one of claims 1 to 9, method comprising:
a stabilization operation step of controlling the at least one power generation system (10) to execute a stabilization operation for increasing a supply of reactive power to the sending end (20) corresponding to the protective operation executed by the sending end converter (12),
the method being **characterized in that**
the stabilization operation is executed by increasing the reactive power so as to obtain intersections between a P-V curve and an active power Ps in the sending end, and the stabilization operation is executed immediately before the execution of the protective operation.

11. The operation method for the power system according to claim 10,
wherein the at least one power generation system (10) includes at least one wind turbine generator (40),
wherein the at least one wind turbine generator (40) is constituted by a wind turbine generator equipped with a synchronous generator, the wind turbine generator (40) comprising a field winding synchronous generator as the synchronous generator (40) configured to generate power using wind power, and
wherein in the stabilization operation step, a field control is executed by the field winding synchronous generator so as to execute the stabilization operation by the wind turbine generator (40) equipped with the synchronous generator.

12. The operation method for the power system according to claim 10 or 11, the method further comprising:
an output reduction step, after the stabilization operation step, of controlling the at least one power generation system (10) to execute an output reduction operation for reducing active power to be supplied to the sending end (20).

13. A control device (18) for the power system according to any one of claims 1 to 9,
**characterized by** the fact that the control device (18) is configured to control the operation method of any one of claims 10 to 12.

## Patentansprüche

1. Stromsystem, das Folgendes umfasst:
mindestens ein Stromerzeugungssystem (10), das eine Vielzahl von Windturbinengeneratoren umfasst, wobei das Stromerzeugungssystem (10) dazu ausgelegt ist, einem Sendeende (20) AC-Strom zuzuführen;
einen Sendeendewandler (12), der dazu ausgelegt ist, den AC-Strom in DC-Strom umzuwandeln, wobei der Sendeendewandler (12) ein Empfangsende (22) aufweist, das via eine AC-Übertragungsleitung (24) mit dem Sendeende (20) verbunden ist;
einen Empfangsendewandler (14), der dazu ausgelegt ist, den DC-Strom in AC-Strom umzuwandeln, wobei der Empfangsendewandler (14) via eine DC-Übertragungsleitung (30) mit dem Sendeendewandler (12) verbunden ist;
eine Schutzvorrichtung (16), die dazu ausgelegt ist, den Sendeendewandler (12) derart zu steuern, dass er einen Schutzbetrieb zum Absenken einer AC-Spannung am Empfangsende (22) ausführt, wenn eine DC-Spannung in der DC-Übertragungsleitung (30) über einen Schwellwert ansteigt; und
eine Steuervorrichtung (18), die dazu ausgelegt ist, das mindestens eine Stromerzeugungssystem (10) derart zu steuern, dass es einen Stabilisierungsbetrieb zum Erhöhen einer Zuführung von Blindleistung zum Sendeende (20) entsprechend dem Schutzbetrieb, der vom Sendeendewandler (12) ausgeführt wird, ausführt;
wobei das Stromsystem **dadurch gekennzeichnet ist, dass**
die Steuervorrichtung dazu ausgelegt ist, mindestens einen Windturbinengenerator (40), der aus der Vielzahl von Windturbinengeneratoren (40) ausgewählt wird, derart zu steuern, dass er den Stabilisierungsbetrieb ausführt,
der Stabilisierungsbetrieb durch Erhöhen der Blindleistung ausgeführt wird, um Überschneidungen zwischen einer P-V-Kurve und einer Wirkleistung Ps im Sendeende zu erhalten, und
der Stabilisierungsbetrieb unmittelbar vor der Ausführung des Schutzbetriebs ausgeführt wird.

2. Stromsystem nach Anspruch 1, wobei die Steuervorrichtung dazu ausgelegt ist, einen Windturbinengenerator zum Ausführen des Stabilisierungsbetriebs auszuwählen, dessen Wirkleistungserzeugungsmenge in der Vielzahl von Windturbinengeneratoren klein ist, um den Stabilisierungsbetrieb auszuführen.

3. Stromsystem nach einem der Ansprüche 1-2,
wobei das mindestens eine Stromerzeugungssystem (10) mindestens einen Windturbinengenerator (40) beinhaltet,
wobei der mindestens eine Windturbinengenerator (40) durch einen Windturbinengenerator, der mit einem Synchrongenerator ausgerüstet ist, konstituiert wird, wobei der Windturbinengenerator (40) einen Feldwicklungssynchrongenerator als den Synchrongenerator umfasst, der dazu ausgelegt ist, Strom unter Verwendung von Windkraft zu erzeugen, und
wobei die Steuervorrichtung (18) dazu ausgelegt ist, den Feldwicklungssynchrongenerator derart zu steuern, dass er eine Feldsteuerung ausführt, um den Windturbinengenerator (40) mit dem Synchrongenerator zum Ausführen des Stabilisierungsbetriebs zu steuern.

4. Stromsystem nach einem der Ansprüche 1 bis 3,
wobei das mindestens eine Stromerzeugungssystem (10) durch eine Vielzahl von Stromerzeugungssystemen konstituiert wird, und
wobei die Steuervorrichtung (18) dazu ausgelegt ist, von jedem der Vielzahl von Stromerzeugungssystemen (10) Betriebsinformationen zu sammeln und auf Basis der gesammelten Betriebsinformationen zum Ausführen des Stabilisierungsbetriebs ein Stromerzeugungssystem aus der Vielzahl von Stromerzeugungssystem auszuwählen.

5. Stromsystem nach einem der Ansprüche 1 bis 4, das ferner Folgendes umfasst:
einen Sensor (36;38), der dazu ausgelegt ist, Informationen über die AC-Spannung am Empfangsende (22) zu erhalten,
wobei die Steuervorrichtung (19) dazu ausgelegt ist, das mindestens eine Stromerzeugungssystem (10) auf Basis der Informationen, die vom Sensor (36;38) erhalten werden, derart zu steuern, dass es den Stabilisierungsbetrieb ausführt.

6. Stromsystem nach Anspruch 5,
wobei der Sensor (36;38) durch ein Voltmeter, das dazu ausgelegt ist, die AC-Spannung am Empfangsende (22) zu messen, konstituiert wird.

7. Stromsystem nach einem der Ansprüche 1 bis 6,
wobei die Steuervorrichtung (18) dazu ausgelegt ist, das mindestens eine Stromerzeugungssystem (10) derart zu steuern, dass es einen Ausgabereduzierungsbetrieb zum Reduzieren einer Wirkleistung, die dem Sendeende (20) zuzuführen ist, entsprechend dem Schutzbetrieb ausführt.

8. Stromsystem nach Anspruch 7,
wobei die Steuervorrichtung (18) dazu ausgelegt ist, die Wirkleistung, die dem Sendeende (20) zuzuführen ist, in Abhängigkeit von einem oder beidem der AC-Spannung am Empfangsende (22) und der DC-Spannung in der DC-Übertragungsleitung (30), zu reduzieren.

9. Stromsystem nach einem der Ansprüche 1 bis 8,
wobei das mindestens eine Stromerzeugungssystem (10) durch eine Vielzahl von Stromerzeugungssystemen konstituiert wird,
wobei jedes der Vielzahl von Stromerzeugungssystemen eine Vielzahl von Windturbinengeneratoren (40), die offshore angeordnet sind, umfasst,
wobei der Sendeendewandler (12) offshore angeordnet ist,
wobei der Empfangsendewandler (14) onshore angeordnet ist, und
wobei die DC-Übertragungsleitung (30) mindestens teilweise im Meer verlegt ist.

10. Betriebsverfahren für ein Stromsystem nach einem der Ansprüche 1 bis 9, wobei das Verfahren Folgendes umfasst:
einen Stabilisierungsbetriebsschritt zum Steuern von mindestens einem Stromerzeugungssystem (10) derart, dass es einen Stabilisierungsbetrieb zum Erhöhen einer Zuführung von Blindleistung zum Sendeende (20) entsprechend dem Schutzbetrieb, der vom Sendeendewandler (12) ausgeführt wird, ausführt,
wobei das Verfahren **dadurch gekennzeichnet ist, dass**
der Stabilisierungsbetrieb durch Erhöhen der Blindleistung ausgeführt wird, um Überschneidungen zwischen einer P-V-Kurve und einer Wirkleistung Ps im Sendeende zu erhalten, und
der Stabilisierungsbetrieb unmittelbar vor der Ausführung des Schutzbetriebs ausgeführt wird.

11. Betriebsverfahren für das Stromsystem nach Anspruch 10, wobei das mindestens eine Stromerzeugungssystem (10) mindestens einen Windturbinengenerator (40) beinhaltet,
wobei der mindestens eine Windturbinengenerator (40) durch einen Windturbinengenerator, der mit einem Synchrongenerator ausgerüstet ist, konstituiert wird, wobei der Windturbinengenerator (40) einen Feldwicklungssynchrongenerator als den Synchrongenerator (40) umfasst, der dazu ausgelegt ist, Strom unter Verwendung von Windkraft zu erzeugen, und
wobei beim Stabilisierungsbetriebsschritt vom Feldwicklungssynchrongenerator eine Feldsteuerung ausgeführt wird, derart, dass der Stabilisierungsbetrieb vom Windturbinengenerator (40), der mit dem Synchrongenerator ausgerüstet ist, ausgeführt wird.

12. Betriebsverfahren für das Stromsystem nach Anspruch 10 oder 11, wobei das Verfahren ferner Folgendes umfasst:
nach dem Stabilisierungsbetriebsschritt einen Ausgabereduzierungsschritt zum Steuern des mindestens einen Stromerzeugungssystems (10) derart, dass es einen Ausgabereduzierungsbetrieb zum Reduzieren einer Wirkleistung, die dem Sendeende (20) zuzuführen ist, ausführt.

13. Steuervorrichtung (18) für das Stromsystem nach einem der Ansprüche 1 bis 9,
**gekennzeichnet durch** die Tatsache, dass die Steuervorrichtung (18) dazu ausgelegt ist, das Betriebsverfahren nach einem der Ansprüche 10 bis 12 zu steuern.

## Revendications

1. Système d'alimentation comprenant :
au moins un système de génération de puissance (10) comprenant une pluralité de générateurs de turbines éoliennes, le système de génération de puissance (10) étant configuré pour fournir de la puissance alternative à une extrémité d'envoi (20) ;
un convertisseur d'extrémité d'envoi (12) configuré pour convertir la puissance alternative en puissance continue, le convertisseur d'extrémité d'envoi (12) ayant une extrémité de réception (22) qui est connectée à l'extrémité d'envoi (20) via une ligne de transmission de courant alternatif (24) ;
un convertisseur d'extrémité de réception (14) configuré pour convertir la puissance continue en puissance alternative, le convertisseur d'extrémité de réception (14) étant connecté au convertisseur d'extrémité d'envoi (12) via une ligne de transmission de courant continu (30) ;
un dispositif de protection (16) configuré pour commander le convertisseur d'extrémité d'envoi (12) pour exécuter une opération de protection pour abaisser la tension alternative à l'extrémité de réception (22) lorsqu'une tension continue dans la ligne de transmission de courant continu (30) s'élève au-delà d'un seuil ; et
un dispositif de commande (18) configuré pour commander le au moins un système de génération de puissance (10) pour exécuter une opération de stabilisation pour augmenter une puissance réactive fournie à l'extrémité d'envoi (20) correspondant à l'opération de protection exécutée par le convertisseur d'extrémité d'envoi (12) ;
le système d'alimentation étant **caractérisé en ce que**
le dispositif de commande est configuré pour commander au moins un générateur de turbine éolienne (40) sélectionné dans la pluralité de générateurs de turbines éoliennes (40) pour exécuter l'opération de stabilisation,
l'opération de stabilisation est exécutée en augmentant la puissance réactive de manière à obtenir des intersections entre une courbe P-V et une puissance active Ps dans l'extrémité d'envoi, et
l'opération de stabilisation est exécutée immédiatement avant l'exécution de l'opération de protection.

2. Système d'alimentation selon la revendication 1, dans lequel le dispositif de commande est configuré pour sélectionner un générateur de turbine éolienne pour exécuter l'opération de stabilisation dont une quantité de génération de puissance active est petite parmi la pluralité de générateurs de turbines éoliennes pour exécuter l'opération de stabilisation.

3. Système d'alimentation selon l'une quelconque des revendications 1 à 2,
dans lequel le au moins un système de génération de puissance (10) comporte au moins un générateur de turbine éolienne (40),
dans lequel le au moins un générateur de turbine éolienne (40) est constitué par un générateur de turbine éolienne équipé d'un générateur synchrone, le générateur de turbine éolienne (40) comprenant un générateur synchrone à enroulement de champ comme générateur synchrone configuré pour générer de la puissance en utilisant l'énergie éolienne, et
dans lequel le dispositif de commande (18) est configuré pour commander le générateur synchrone à enroulement de champ pour exécuter une commande de champ de manière à commander le générateur de turbine éolienne (40) avec le générateur synchrone pour exécuter l'opération de stabilisation.

4. Système d'alimentation selon l'une quelconque des revendications 1 à 3,
dans lequel le au moins un système de génération de puissance (10) est constitué par une pluralité de systèmes de génération de puissance, et
dans lequel le dispositif de commande (18) est configuré pour collecter des informations d'opération de chacun de la pluralité de systèmes de génération de puissance (10) et pour sélectionner un système de génération de puissance pour exécuter l'opération de stabilisation à partir de la pluralité de systèmes de génération de puissance sur la base des informations d'opération collectées.

5. Système d'alimentation selon l'une quelconque des revendications 1 à 4, comprenant en outre :
un capteur (36 ; 38) configuré pour obtenir des informations concernant la tension alternative à l'extrémité de réception (22),
dans lequel le dispositif de commande (19) est configuré pour commander le au moins un système de génération de puissance (10) pour exécuter l'opération de stabilisation sur la base des informations obtenues par le capteur (36 ; 38).

6. Système d'alimentation selon la revendication 5,
dans lequel le capteur (36 ; 38) est constitué par un voltmètre qui est configuré pour mesurer la tension alternative à l'extrémité de réception (22).

7. Système d'alimentation selon l'une quelconque des revendications 1 à 6,
dans lequel le dispositif de commande (18) est configuré pour commander le au moins un système de génération de puissance (10) pour exécuter une opération de réduction de sortie pour réduire la puissance active à fournir à l'extrémité d'envoi (20) correspondant à l'opération de protection.

8. Système d'alimentation selon la revendication 7,
dans lequel le dispositif de commande (18) est configuré pour réduire la puissance active à fournir à l'extrémité d'envoi (20) en fonction de l'une parmi la tension alternative à l'extrémité de réception (22) et la tension continue dans la ligne de transmission de courant continu (30), ou des deux.

9. Système d'alimentation selon l'une quelconque des revendications 1 à 8,
dans lequel le au moins un système de génération de puissance (10) est constitué par une pluralité de systèmes de génération de puissance,
dans lequel chacun de la pluralité de systèmes de génération de puissance comprend une pluralité de générateurs de turbines éoliennes (40) disposés au large,
dans lequel le convertisseur d'extrémité d'envoi (12) est disposé au large,
dans lequel le convertisseur d'extrémité de réception (14) est disposé à terre, et
dans lequel la ligne de transmission de courant continu (30) est posée au moins en partie dans la mer.

10. Procédé de fonctionnement pour un système d'alimentation selon l'une quelconque des revendications 1 à 9, comprenant :
une étape d'opération de stabilisation de commande du au moins un système de génération de puissance (10) pour exécuter une opération de stabilisation pour augmenter une puissance réactive fournie à l'extrémité d'envoi (20) correspondant à l'opération de protection exécutée par le convertisseur d'extrémité d'envoi (12),
le procédé étant **caractérisé en ce que**
l'opération de stabilisation est exécutée en augmentant la puissance réactive de manière à obtenir des intersections entre une courbe P-V et une puissance active Ps dans l'extrémité d'envoi, et
l'opération de stabilisation est exécutée immédiatement avant l'exécution de l'opération de protection.

11. Procédé de fonctionnement pour le système d'alimentation selon la revendication 10,
dans lequel le au moins un système de génération de puissance (10) comporte au moins un générateur de turbine éolienne (40),
dans lequel le au moins un générateur de turbine éolienne (40) est constitué par un générateur de turbine éolienne équipé d'un générateur synchrone, le générateur de turbine éolienne (40) comprenant un générateur synchrone à enroulement de champ comme générateur synchrone (40) configuré pour générer de la puissance en utilisant l'énergie éolienne, et
dans lequel, à l'étape d'opération de stabilisation, une commande de champ est exécutée par le générateur synchrone à enroulement de champ de manière à exécuter l'opération de stabilisation par le générateur de turbine éolienne (40) équipé du générateur synchrone.

12. Procédé de fonctionnement pour le système d'alimentation selon la revendication 10 ou 11, le procédé comprenant en outre :
une étape de réduction de sortie, après l'étape d'opération de stabilisation, de commande du au moins un système de génération de puissance (10) pour exécuter une opération de réduction de sortie pour réduire la puissance active à fournir à l'extrémité d'envoi (20).

13. Dispositif de commande (18) pour le système d'alimentation selon l'une quelconque des revendications 1 à 9, **caractérisé en ce que** le dispositif de commande (18) est configuré pour commander le procédé de fonctionnement de l'une quelconque des revendications 10 à 12.
